# EUROPEAN PATENT SPECIFICATION

(11) **EP 1 612 021 B1**
(45) Date of publication and mention of the grant of the patent: **02.09.2009**
(21) Application number: 05012667.1
(22) Date of filing: 13.06.2005
(51) Int. Cl.: B29C 33/68, B32B 27/08, H01L 21/56, B29K 67/00, B29K 27/12

(54) **Release film for encapsulation of semiconductor chip**
Trennfolie für die Einkapselung von Halbleiterchips
Film de relâchement pour l'encapsulation des puces semi-conductrices

(30) Priority: 29.06.2004 JP 2004191258
(43) Date of publication of application: 04.01.2006
(73) Proprietor: ASAHI GLASS COMPANY LTD., Tokyo 100-8405 (JP)
(72) Inventor: Kaya, Seitoku c/o Asahi Glass Company, Ltd., Ichihara-shi Chiba (JP); Fujimoto, Yuki c/o Asahi Glass Company, Ltd., Ichihara-shi Chiba (JP)
(74) Representative: Müller-Boré & Partner Patentanwälte

(56) References cited:
- EP-A- 1 113 490
- EP-A- 1 226 933
- EP-A- 1 364 762
- EP-A- 1 375 134
- PATENT ABSTRACTS OF JAPAN vol. 2002, no. 08, 5 August 2002 (2002-08-05) & JP 2002 120335 A (MITSUBISHI PLASTICS IND LTD), 23 April 2002 (2002-04-23)

## Description

The present invention relates to the use of a release film for encapsulation of a semiconductor chip.

In production of a resin encapsulation semiconductor package, a release film is present between a face to be encapsulated of a semiconductor chip and a mold. The reason is to secure releasability between an encapsulation resin and the mold when the semiconductor chip is encapsulated with a resin and to smoothly produce the semiconductor package.

Among resin encapsulation semiconductor packages, particularly in production of a semiconductor package (such as Quad Flat Non-Leaded Package (hereinafter referred to as QFN) or Small Outline-Leaded Package (hereinafter referred to as SON)) wherein external lead terminal pins are embedded in the interior of the package and the surfaces of the terminals are exposed from an encapsulation resin, the following may be mentioned as characteristics required for a release film.
A1. A standoff height can favorably be formed in a semiconductor package.
A2. No sag nor wrinkle will be formed on the release film at a portion between terminals of the semiconductor package at the time of encapsulation with a resin. A wrinkle on the release film may cause such a nonconformity that an encapsulation resin has a dent shape (hereinafter sometimes referred to as "dent") at the wrinkled portion.
A3. There will be no gap between the release film and the surfaces of the terminals of the semiconductor package. The gap may cause such a nonconformity that the encapsulation resin covers and adheres to the surfaces of the terminals (hereinafter sometimes referred to as "resin covering").
A4. It is excellent in releasability from the semiconductor package after encapsulation with a resin.

It has been known that as a release film for a resin mold of a semiconductor package, a tetrafluoroethylene-hexafluoropropylene copolymer (hereinafter sometimes referred to as FEP) film, a polyethylene terephthalate (hereinafter referred to as PET) film or glass cloth impregnated with a fluororesin may, for example, be mentioned (for example, JP-A-8-197567). As a release film for resin mold formation, a release film made of a thermoplastic tetrafluoroethylene copolymer such as an ethylene-tetrafluoroethylene copolymer (hereinafter sometimes referred to as ETFE), FEP or a tetrafluoroethylene-perfluoroalkyl vinyl ether copolymer (hereinafter sometimes referred to as PFA) has been known (for example, JP-A-2001-310336). Further, as a material of a release film for semiconductor package formation, PET, polybutylene terephthalate (hereinafter sometimes referred to as PBT), polystyrene, polytetrafluoroethylene (hereinafter sometimes referred to as PTFE), nylon, etc. have been known (for example, JP-A-8-186141).

However, when a film made only of a resin having a high modulus of elasticity in tension such as PET is used as a release film, there is a problem of occurrence of the resin covering on the surfaces of terminals of a semiconductor package. When a film made only of a resin having a low modulus of elasticity in tension such as FEP or PFA is used as a release film, there is a problem of occurrence of a sag or a wrinkle on the film during formation, thus causing a dent between terminals of a semiconductor package.

As a release film for formation of a semiconductor package such as QFN or SON, a laminated film comprising a substrate film and a film made of a fluoropolymer material laminated on one side of the substrate film has been known. It has been known that as the release film, a laminated film comprising thin films of polyimide-PTFE, aluminum-PTFE or polyimide-fluororubber-FEP can be used (for example, EP-A-1113490 or JP-A-2001-250838). In such a laminated film, the layer made of a fluoropolymer material is formed by coating an aqueous dispersion of a powder of the fluoropolymer material, drying it and baking it by heating.

The thickness of the layer formed by the above operation is limited to a certain extent. Accordingly, in order to increase the thickness, the above operation has to be repeated until a desired thickness is achieved. Therefore, a very complicated operation is required to achieve a desired thickness of the layer. Namely, it takes trouble and time to obtain a release film for production of a semiconductor package having an optional standoff height. The standoff height means a difference in height between the top surface of terminals of a semiconductor chip lead frame and the top surface of a semiconductor package encapsulation resin. Further, the cost for production of a semiconductor package tends to be high with a laminated film using an expensive polyimide film as a substrate film.

Further, in production of a semiconductor package (hereinafter referred to as chip exposure semiconductor package) having an exposed face which is not molded with a resin at a part of a semiconductor chip, the following may be mentioned as characteristics required for a release film.
B1. No sag nor wrinkle will be formed on the release film at the periphery of a semiconductor chip at the time of encapsulation with a resin. A sag or a wrinkle on the release film at the above portion may cause such a problem that an encapsulation resin has a dent shape (hereinafter sometimes referred to as "dent", and the term "dent" includes "dent" in the above A2 in some cases).
B2. There will be no gap between the release film and the surface of the semiconductor chip. The gap may cause such a problem that the encapsulation resin covers and adheres to the surface of the chip (hereinafter sometimes referred to as "resin covering", and the term "resin covering" includes "resin covering" in the above A3 in some cases).
B3. When a mold is in contact with the semiconductor chip via the release film at the time of encapsulation with a resin, the release film can protect the semiconductor chip and prevent it from being broken.
B4. It is excellent in releasability from the semiconductor package after encapsulation with a resin.

It has been known that in production of a chip exposure semiconductor package, convex protrusions are formed on the surface of a mold, which push down a part of the release film disposed on the surface of the mold at the time of molding with a resin, whereby the release film is stretched, and wrinkles in the release film at the periphery of the semiconductor chip can be eliminated resultingly. Further, it has been known to use a mold having a floating block which goes up and down by a spring, so as to prevent breakage of the semiconductor chip (for example, JP-A-2002-254481). However, it has not been disclosed that wrinkles in a release film or breakage of a semiconductor chip can be prevented by using a release film having a specific structure.

EP-A-1 226 933 and EP-A-1 375 134 describe a releasing laminated film which comprises a supporting film having a tensile modulus of elasticity in a traverse direction measured according to ASTM D882 of 980 to 6,860 N/mm² and at least one film comprising a fluororesin laminated on at least one side of the supporting film.

EP-A-1 364 762 describes a release film having a three-layer structure consisting of a layer A, a layer B and a layer C laminated in this order, wherein the layer A comprises a fluororesin having a melting point higher than the press molding temperature of a product to be molded, the layer B comprises a thermoplastic resin having a melting point of from 70 to 100°C, and the layer C comprises a fluororesin or a non-fluororesin having a melting point higher than the above-press molding temperature.

JP-A-2002-120335 describes a laminated film, wherein a fluorocarbon resin film layer (A) is laminated on a support film layer (B) through an anchor coat layer (C) of at least one resin selected from the group consisting of a partially saponified ethylene-vinyl acetate copolymer, an ethylene-acrylic acid copolymer ionomer, and an ethylene-methacrylic acid copolymer inonomer.

Under these circumstances, it is an object of the present invention to provide a use of a release film for encapsulation of a semiconductor chip which can prevent, in production of a semiconductor package, occurrence of a dent or resin covering. Further, it is an object of the present invention to provide a use of a release film for encapsulation of a semiconductor chip which can form, in production of a semiconductor package wherein the surfaces of terminals are exposed from an encapsulation resin, such as QFN or SON, a favorable standoff height. Further, it is an object of the present invention to provide a use of a release film for encapsulation of a semiconductor chip which will not break a semiconductor chip, in production of a chip exposure semiconductor package.

Claim 1 of the present invention provides a use of a release film for encapsulation of a semiconductor chip or for production of a semiconductor package, which is a laminated film comprising a substrate film consisting of an oriented polyester resin film and a film made of a fluororesin laminated on at least one side of the substrate film, wherein the substrate film has a modulus of elasticity in tension in an orientation direction at 180°C of from 150 to 400 MPa, and wherein the substrate film and the fluororesin film are laminated via an adhesive layer in a thickness of from 0.1 to 3 µm.

Further embodiments of the present invention are characterized in the dependent claims.

When a semiconductor package is produced by using a release film as defined in the present invention, no dent nor resin covering will occur on the semiconductor package. In production of a semiconductor package wherein the surfaces of terminals are exposed from an encapsulation resin, such as QFN or SON, a more favorable standoff height can be obtained. Further, it is easy to achieve an optional thickness of the film made of a fluororesin in the release film of the present invention, and accordingly an optional standoff height can be easily adjusted when a semiconductor package is produced by using the laminated film.

Further, in production of a chip exposure semiconductor package, a semiconductor package can be produced without breakage of a semiconductor chip.

In the accompanying drawings:
Fig. 1 is a sectional view illustrating one example of the release film of the present invention.
Figs. 2(A), 2(B), 2(C) and 2(D) are sectional views illustrating a process for producing QFN using a release film as defined in the present invention.
Figs. 3(E), 3(F), 3(G), 3(H) and 3(I) are sectional views illustrating a process for producing a chip exposure semiconductor package using the release film of the present invention.

Now, the present invention will be described in detail with reference to the preferred embodiments.

The polyester resin to be used for the substrate film usable in the present invention may, for example, be PET, PBT or polyethylene naphthalate. Among them, PET is preferred in view of cost, etc.

The melting point of the polyester resin usable in the present invention is preferably higher than the molding temperature of an encapsulation resin, more preferably at least (the molding temperature + 20)°C, most preferably at least (the molding temperature + 50)°C. If the melting point is higher than the molding temperature of an encapsulation resin, the substrate film is less likely to be deformed at the time of molding with the encapsulation resin.

The substrate film usable in the present invention is preferably one which is less likely to be deformed by compression under a clamping pressure (hereinafter sometimes referred to as molding pressure) at the time of molding by a mold for encapsulation with a resin at a temperature (hereinafter sometimes referred to as molding temperature) at the time of molding by a mold, in production of a semiconductor package. The film has a modulus of elasticity in tension in an orientation direction at 180°C of from 150 to 400 MPa, preferably from 175 to 300 MPa.

The substrate film usable in the present invention is preferably a biaxially oriented polyester resin film.

The fluororesin usable in the present invention is preferably a thermoplastic tetrafluoroethylene copolymer. When a thermoplastic tetrafluoroethylene copolymer is used for the release film usable according to the present invention, since it has a low modulus of elasticity in compression under a molding pressure at a molding temperature of a resin for encapsulation of a semiconductor chip, no encapsulation resin covering will occur, and a favorable standoff height can be achieved. Specifically, the fluororesin may, for example, be ETFE, FEP or PFA. ETFE is more preferred, which is excellent in molding properties, excellent in releasability from a resin and available at a low cost.

ETFE is preferably a copolymer of tetrafluoroethylene and ethylene or a copolymer of tetrafluoroethylene, ethylene and another monomer.

Said another monomer may, for example, be a fluoroolefin such as chlorotrifluoroethylene, hexafluoropropylene, a perfluoro(alkyl vinyl ether) or vinylidene fluoride, a polyfluoroalkylethylene such as CH₂=CHR^{f} (wherein R^{f} represents a C₁₋₈ polyfluoroalkyl group, the same applies hereinafter) or CH₂=CFR^{f}, or a polyfluoroalkyl trifluorovinyl ether such as CF₂=CFOCH₂R^{f}. They may be used alone or in combination as a mixture of at least two.

Particularly, the above CH₂=CHR^{f} is preferred. R^{f} is more preferably a C₃₋₆ perfluoroalkyl group, most preferably C₄F₉.

As the composition of ETFE, the molar ratio of polymerization units based on tetrafluoroethylene/polymerization units based on ethylene is preferably from 70/30 to 30/70, more preferably from 65/35 to 40/60, most preferably from 60/40 to 45/55.

When polymerization units based on another monomer are contained, the content of the polymerization units based on another monomer is preferably from 0.01 to 30 mol%, more preferably from 0.05 to 15 mol%, most preferably from 0.1 to 10 mol%, based on the total number of moles of the polymerization units based on tetrafluoroethylene and ethylene.

The thickness of the film made of a fluororesin (hereinafter sometimes referred to as fluororesin film) usable in the present invention may optionally be selected. The standoff height of a semiconductor package can be adjusted by suitably selecting the thickness. The thickness of the fluororesin film is preferably from 1 to 50 µm, more preferably from 2 to 30 µm, most preferably from 3 to 15 µm. If the film is too thick, the film compressed between the semiconductor chip and the mold may overflow into a space between terminals of a lead frame or into the periphery of the semiconductor chip, thus forming a part where no encapsulation resin is present. Further, if the film is too thin, substantially no standoff height will be formed on the semiconductor package to be obtained, and resin covering may occur on the top surface of terminals of the lead frame. Further, resin covering on the surface of the semiconductor chip may occur in the case of a chip exposure semiconductor package.

The release film usable according to the present invention is a film obtained by laminating a fluororesin film on at least one side of a substrate film. The fluororesin film may be laminated on one side or on both sides of the substrate film, depending upon the conditions for use. When the fluororesin film is laminated on both sides of the substrate film, the surface of the fluororesin film on one side is preferably subjected to embossing.

In the release film usable according to the present invention, the substrate film and the fluororesin film are laminated via an adhesive layer. Usually, a thin layer of an adhesive is used for the adhesive layer. The adhesive may, for example, be a polyester adhesive, an acrylic modified adhesive, an isocyanate adhesive, a polyethyleneimine adhesive, a polyurethane adhesive or a silane coupling agent adhesive. Among them, a polyester adhesive is preferred. The thickness of the adhesive layer is from 0.1 to 3 µm. The adhesive strength between the fluororesin film and the substrate film is preferably at least 5 (N/10 cm). When the adhesive strength is at least 5 (N/10 cm), the bonded films are less likely to be separated in the process of encapsulation with a resin in production of a semiconductor package.

The degrees of dimensional change on heating of the laminated film usable in the present invention in a machine direction and in a transverse direction are both preferably within a range of from -10 to +5%, more preferably from -5 to +2%. The degree of dimensional change on heating is measured in accordance with a method as defined in JIS K7133 wherein the temperature is 180°C and the heating time is 30 minutes in 6. Operation of JIS K7133.

A method for producing the release film usable in the present invention is not particularly limited, but production by a dry laminate method is preferred. At the time of production, the surface to be bonded of the fluororesin film is preferably subjected to a surface treatment such as a corona treatment so as to improve adhesive properties, prior to lamination of the substrate film and the fluororesin film.

The release film usable in the present invention is used in a process of encapsulation of a semiconductor chip with a resin in production of a semiconductor package. It is used particularly preferably for production of a semiconductor package with no external lead terminal pins wherein external lead terminal pins are embedded in the interior of the package and the top surface of the terminals are exposed from an encapsulation resin, or in production of a chip exposure semiconductor package. The semiconductor package with no external lead terminal pins may, for example, be QFN or SON. Further, it can also be used for production of another semiconductor package such as a wafer level CSP or a flip chip type wherein terminals which are in contact with external connection terminals such as solder balls are exposed from an encapsulation resin.

Now, one example of a process for producing a semiconductor package using a release as defined in the present invention is explained below. However, the present invention is not limited thereto.

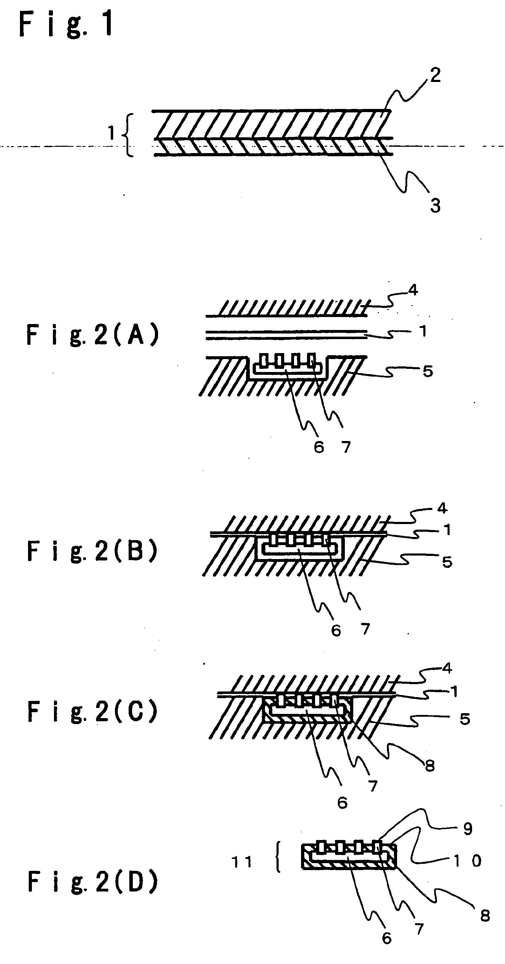

Fig. 1 illustrates a release film 1 of the present invention. The release film 1 comprises a substrate film 2 consisting of a biaxially oriented polyester resin film and a fluororesin film 3 laminated on one side of the substrate film 2 by means of an adhesive layer (not shown).

Figs. 2(A) to 2(D) are sectional views illustrating a process for producing QFN wherein a semiconductor chip is encapsulated with a resin according to the use of the release film 1 of the present invention. As shown in Fig. 2(A), a semiconductor chip 6 is put on a lower mold 5 of a transfer injection molding apparatus. The release film 1 is inserted between the semiconductor chip 6 and an upper mold 4. The semiconductor chip 6 has terminals 7. Then, as shown in Fig. 2(B), the upper mold 4 and the lower mold 5 are fastened via the release film 1 and the semiconductor chip 6.

After the molds are fastened, as shown in Fig. 2(C), an encapsulation resin 8 is injected into a space between the molds, and the molds are filled with the encapsulation resin 8. Then, the upper mold 4 and the lower mold 5 are unfastened. The semiconductor chip 6 encapsulated with the encapsulation resin 8 is taken out and cut by a cutter. As a result, QFN 11 as shown in Fig. 2(D) is obtained. In Fig. 2(D), the difference in height between the top surfaces 9 of the terminals and the top surface 10 of the encapsulation resin is the standoff height.

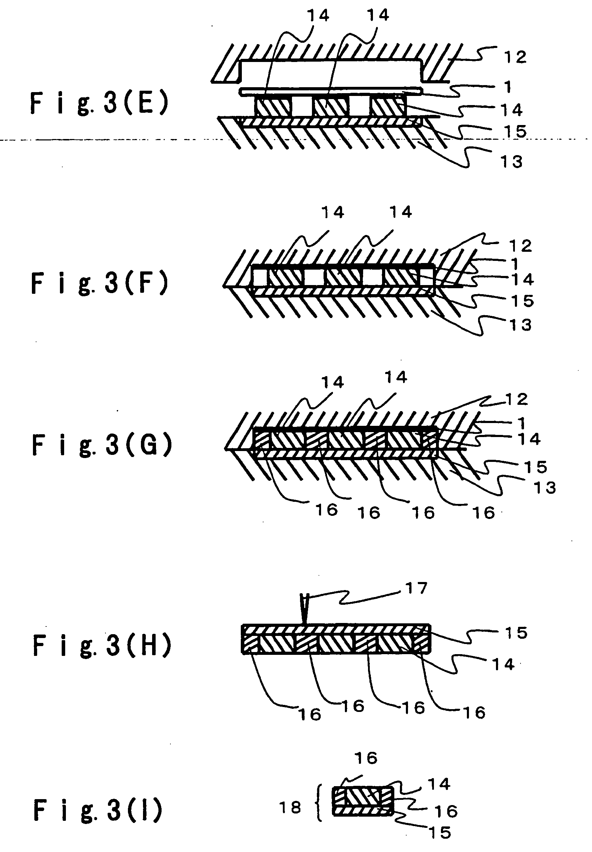

Figs. 3(E) to 3(I) are sectional views illustrating a process for producing a chip exposure semiconductor package wherein a semiconductor chip is encapsulated with a resin according to the use of the release film of the present invention. As shown in Fig. 3(E), a substrate 15 having semiconductor chips 14 preliminarily mounted thereon is put on a lower mold 13. A release film 1 is supplied between an upper mold 12 and the semiconductor chips 14. As shown in Fig. 3(F), the semiconductor chips 14 are clamped between the upper mold 12 and the lower mold 13 in such a state that surfaces to be exposed faces of the semiconductor chips 14 are covered with the release film 1. As shown in Fig. 3(G), an encapsulation resin 16 softened by the heated molds flows into a space, and the molds are filled with the enclosure resin 16 so that the enclosure resin 16 covers the side surfaces of the semiconductor chips 14. Then, the molds are unfastened, and as shown in Fig. 3(H), a semiconductor package in which a plurality of semiconductor chips having exposed faces are encapsulated all at once with the encapsulation resin 16 on the substrate, is taken out. The encapsulation resin 16 in the semiconductor package together with the substrate 15 is cut by a cutter 17. As shown in Fig. 3(I), a chip exposure semiconductor package 18 can be thereby obtained.

Now, the present invention will be described in further detail with reference to Examples. However, it should be understood that the present invention is by no means restricted to such specific examples. Examples 1, 2, 5, 6, 9 and 10 are Examples of the present invention, and Examples 3, 4, 7, 8, 11 and 12 are Comparative Examples.

### EXAMPLE 1 PREPARATION OF A RELEASE FILM P FOR THE USE ACCORDING TO THE PRESENT INVENTION

A polyester adhesive (tradename: AG-9014A, manufactured by Asahi Glass Company, Limited) was coated and dried on one side of a biaxially oriented PET film (tradename: GEC25, manufactured by Teijin DuPont Films Japan Limited, modulus of elasticity in tension: MD/TD=5,378/5,245 MPa) with a thickness of 25 µm and a width of 1,200 mm to form an adhesive layer with a thickness of 0.5 µm. One side of an ETFE film (tradename: Fluon ETFE Film 12N, manufactured by Asahi Glass Company, Limited) with a thickness of 12 µm and a width of 1,200 mm was subjected to a corona treatment. The treated surface and the surface coated with the adhesive of the biaxially oriented PET film were bonded by a dry lamination method at 40°C, whereby the two films were laminated. After the two layers of ETFE/PET were laminated, an ETFE film was further laminated on the other side of the biaxially oriented PET film in the same manner. As a result, a release film P comprising three layers of ETFE/PET/ETFE laminated was obtained. The degrees (%) of dimensional change on heating in a machine direction (MD) and in a transverse direction (TD) of the release film P were measured. The measured values are shown in Table 1. The degree of dimensional change on heating was measured in accordance with a method as defined in JIS K7133 wherein the temperature was 180°C and the heating time was 30 minutes in 6. Operation of JIS K7133.

### EXAMPLE 2 PREPARATION OF A RELEASE FILM Q FOR THE USE ACCORDING TO THE PRESENT INVENTION

A release film Q comprising three layers of ETFE/PET/ETFE laminated was obtained in the same manner as in Example 1 except that a biaxially oriented PET film (tradename: GEC38, manufactured by Teijin DuPont Films Japan Limited, modulus of elasticity in tension: MD/TD=3,437/3,493 MPa) with a thickness of 38 µm and an ETFE film (manufactured by Asahi Glass Company, Limited) with a thickness of 5 µm, one side of which was subjected to a corona treatment, were used. The degrees (%) of dimensional change on heating of the release film Q in a machine direction (MD) and in a transverse direction (TD) were measured, and the measured values are shown in Table 1. The degree of dimensional change on heating was measured in accordance with a method as defined in JIS K7133 wherein the temperature was 180°C and the heating time was 30 minutes in 6. Operation of JIS K7133.

### EXAMPLE 3 RELEASE FILM R

As a release film R, an ETFE film (tradename: Fluon ETFE Film 50N, manufactured by Asahi Glass Company, Limited) with a thickness of 50 µm was used. The degrees (%) of dimensional change on heating of the release film R in a machine direction (MD) and in a transverse direction (TD) were measured, and the measured values are shown in Table 1. The degree of dimensional change on heating was measured in accordance with a method as defined in JIS K7133 wherein the temperature was 180°C and the heating time was 30 minutes in 6. Operation of JIS K7133.

### EXAMPLE 4 RELEASE FILM S

As a release film S, a PET film (tradename: GEC25, manufactured by Teijin DuPont Films Japan Limited) with a thickness of 25 µm was used. The degrees (%) of dimensional change on heating of the release film S in a machine direction (MD) and in a transverse direction (TD) were measured, and the measured values are shown in Table 1. The degree of dimensional change on heating was measured in accordance with a method as defined in JIS K7133 wherein the temperature was 180°C and the heating time was 30 minutes in 6. Operation of JIS K7133. EXAMPLES 5 to 8 PREPARATION OF QFN

Using each of the release films prepared in Examples 1 to 4, 120 semiconductor chips are encapsulated with a resin to produce QFN in accordance with the process shown in Figs. 2(A) to 2(D). The temperature of the mold is 175°C, the molding pressure is 8 MPa, the molding time is 100 seconds, and a thermosetting epoxy resin is used as an encapsulation resin. QFN before cut obtained in the step shown in Fig. 2(C) is visually observed. The presence or absence of a dent in the resin between lead terminals of the above QFN, formed by a wrinkle in the release film, is confirmed. Further, QFN after cut is visually observed, and the results are shown in Table 2 on the basis of the evaluation standards ○: no portion with no resin, ×: there is a portion with no resin. The standoff height of QFN to be obtained is measured with respect to each terminal of QFN, and the results are shown in Table 2 on the basis of the evaluation standards ○: favorable standoff height obtainable, ×: no favorable standoff height obtainable.

### EXAMPLES 9 to 12 PREPARATION OF A CHIP EXPOSURE SEMICONDUCTOR PACKAGE

Using each of the release films prepared in Examples 1 to 4, a chip exposure semiconductor package can be produced by encapsulating twelve semiconductor chips with a resin in accordance with the process as shown in Figs. 3(E) to 3(I). The temperature of the mold is 175°C, the molding pressure is 12 MPa, the molding time is 150 seconds, and a thermosetting epoxy resin is used as an encapsulation resin. A dent in the resin at the periphery of the semiconductor chips in the chip exposure semiconductor package before cut, obtained in the step shown in Fig. 3(H) is visually observed, and the results are shown in Table 3 on the basis of the evaluation standards ○: no dent observed at the periphery, ×: dent observed at the periphery. The resin covering on the surface of the semiconductor chips is visually observed, and the results are shown in Table 3 on the basis of the evaluation standards ○: no resin covering observed, ×: resin covering observed. A breakage of the semiconductor chips is visually observed, and the results are shown in Table 3 on the basis of the evaluation standards ○: no semiconductor chip broken, ×: some semiconductor chips broken. With respect to the semiconductor package obtained after the molds are filled with the resin in the step shown in Fig. 3(G) and the molds are unfastened, the releasability when the release film is peeled is evaluated, and the results are shown in Table 3 on the basis of the evaluation standards ○: the release film easily peeled, ×: the release film adheres to the semiconductor package and is not peeled.

**TABLE 1**

| | Release film | Degree of dimensional change on heating (MD) (%) | Degree of dimensional change on heating (TD) (%) |
|---|---|---|---|
| Ex. 1 | P | -1.7 | 0.6 |
| Ex. 2 | Q | -4.6 | 1.5 |
| Ex. 3 | R | -2.0 | -2.1 |
| Ex. 4 | S | -1.8 | 0.25 |

**TABLE 2**

| | Release film | Dent between leads | Portion with no resin | Standoff height |
|---|---|---|---|---|
| Ex. 5 | P | Nil | ○ | ○ |
| Ex. 6 | Q | Nil | ○ | ○ |
| Ex. 7 | R | Present | × | × |
| Ex. 8 | S | Nil | ○ | × |

**TABLE 3**

| | Release film | Dent around the periphery of chip | Resin covering | Breakage | Releasability |
|---|---|---|---|---|---|
| Ex. 9 | P | ○ | ○ | ○ | ○ |
| Ex. 10 | Q | ○ | ○ | ○ | ○ |
| Ex. 11 | R | × | ○ | ○ | ○ |
| Ex. 12 | S | ○ | × | × | × |

When a semiconductor package is produced by using the release film of the present invention, formation of a dent in the semiconductor package, due to a wrinkle in the release film formed when a semiconductor chip is encapsulated with a resin, can be prevented. Further, the resin covering can be prevented. Further, in production of a semiconductor package wherein the surfaces of terminals are exposed from an encapsulation resin, such as QFN, a favorable standoff height can be obtained. Further, in the use of a release film of the present invention, the thickness of a film made of a fluororesin can be optionally selected. Accordingly, when a semiconductor package is produced using the release film, the standoff height can be optionally adjusted. In production of a chip exposure semiconductor package, breakage of chips during production can be suppressed.

## Claims

1. Use of a release film for encapsulation of a semiconductor chip or for production of a semiconductor package, which is a laminated film comprising a substrate film consisting of an oriented polyester resin film and a film made of a fluororesin laminated on at least one side of the substrate film, wherein the substrate film has a modulus of elasticity in tension in an orientation direction at 180°C of from 150 to 400 MPa, and wherein the substrate film and the fluororesin film are laminated via an adhesive layer in a thickness of from 0.1 to 3 µm.

2. The use for encapsulation of a semiconductor chip according to Claim 1, wherein the fluororesin is an ethylene-tetrafluoroethylene copolymer resin.

3. The use for encapsulation of a semiconductor chip according to Claim 1 or 2, wherein the degrees of dimensional change on heating of the laminated film in a machine direction and in a transverse direction are both within a range of from -10 to +5%, where the degree of dimensional change on heating is measured in accordance with a method as defined in JIS K7133 wherein the temperature is 180°C and the heating time is 30 minutes in 6. Operation of JIS K7133.

4. The use for production of a semiconductor package according to any one of Claims 1 to 3, wherein the semiconductor package is a semiconductor package wherein the surfaces of terminals are exposed from an encapsulation resin.

5. The use for production of a semiconductor package according to any one of Claims 1 to 3, wherein the semiconductor package is a semiconductor package having an exposed face which is not molded with a resin at a part of a semiconductor chip.

## Patentansprüche

1. Verwendung einer Trennfolie für die Einkapselung eines Halbleiterchips oder für die Herstellung einer Halbleiterbaugruppe, welche eine laminierte Folie ist, umfassend eine Substratfolie, welche aus einer gestreckten Polyesterharzfolie besteht, und eine aus einem Fluorharz hergestellte Folie, die auf mindestens eine Seite der Substratfolie laminiert ist, wobei die Substratfolie einen Elastizitätsmodul bei Zugbeanspruchung in einer Streckrichtung bei 180°C von 150 bis 400 MPa aufweist, und wobei die Substratfolie und die Fluorharzfolie über eine Haftschicht in einer Dicke von 0,1 bis 3 µm laminiert sind.

2. Verwendung zur Einkapselung eines Halbleiterchips nach Anspruch 1, wobei das Fluorharz ein Ethylen-Tetrafluorethylencopolymerharz ist.

3. Verwendung zur Einkapselung eines Halbleiterchips nach Anspruch 1 oder 2, wobei der Grad dimensionaler Änderung bei Erwärmen der laminierten Folie in einer Maschinenrichtung und in einer Querrichtung jeweils in einem Bereich von -10 bis +5% liegt, wobei der Grad dimensionaler Änderung bei Erwärmen in Übereinstimmung mit einem wie in JIS K7133 definierten Verfahren gemessen wird, wobei die Temperatur 180°C beträgt und die Erwärmungszeit 30 Minuten beträgt, gemäß 6. Durchführung von JIS K7133.

4. Verwendung zur Herstellung einer Halbleiterbaugruppe nach einem der Ansprüche 1 bis 3, wobei die Halbleiterbaugruppe eine Halbleiterbaugruppe ist, wobei die Oberflächen von Anschlüssen von einem Einkapselungsharz freigelegt sind.

5. Verwendung zur Herstellung einer Halbleiterbaugruppe nach einem der Ansprüche 1 bis 3, wobei die Halbleiterbaugruppe eine Halbleiterbaugruppe ist, welche eine freiliegende Fläche aufweist, die nicht mit einem Harz an einem Teil eines Halbleiterchips geformt bzw. eingegossen ist.

## Revendications

1. Utilisation d'un film de séparation pour l'encapsulation d'une puce à semi-conducteur ou pour la production d'un conditionnement de semi-conducteur, qui est un film stratifié comprenant un film formant substrat constitué d'un film en résine de polyester orienté et d'un film fait d'une résine fluorée déposé en couche sur au moins un côté du film formant substrat, dans laquelle le film formant substrat a un module d'élasticité en tension dans une direction d'orientation à 180 °C de 150 à 400 MPa, et dans laquelle le film formant substrat et le film de résine fluorée sont stratifiés par l'intermédiaire d'une couche adhésive d'une épaisseur de 0,1 à 3 µm.

2. Utilisation pour l'encapsulation d'une puce à semi-conducteur selon la revendication 1, dans laquelle la résine fluorée est une résine de copolymère d'éthylène-tétrafluoroéthylène.

3. Utilisation pour l'encapsulation d'une puce à semi-conducteur selon la revendication 1 ou 2, dans laquelle les degrés de variation dimensionnelle lors du chauffage du film stratifié dans une direction machine et dans une direction transversale sont tous deux dans une plage de - 10 à + 5 %, le degré de variation dimensionnelle lors du chauffage étant mesuré conformément à une méthode telle que définie dans JIS K7133 dans laquelle la température est de 180 °C et la durée de chauffage est de 30 minutes dans 6. Mode opératoire de JIS K7133.

4. Utilisation pour la production d'un conditionnement de semi-conducteur selon l'une quelconque des revendications 1 à 3, dans laquelle le conditionnement de semi-conducteur est un conditionnement de semi-conducteur dans lequel les surfaces de bornes sont exposées à partir d'une résine d'encapsulation.

5. Utilisation pour la production d'un conditionnement de semi-conducteur selon l'une quelconque des revendications 1 à 3, dans laquelle le conditionnement de semi-conducteur est un conditionnement de semi-conducteur dont une face exposée n'est pas moulée avec une résine sur au niveau d'une partie d'une puce à semi-conducteur.
